(19) Europäisches Patentamt / European Patent Office / Office européen des brevets

(11) **EP 3 803 916 B1**

(12) **EUROPEAN PATENT SPECIFICATION**

(45) Date of publication and mention
of the grant of the patent:
**27.07.2022 Bulletin 2022/30**

(21) Application number: **19720406.8**

(22) Date of filing: **09.04.2019**

(51) International Patent Classification (IPC):
*H01F 6/06* *(2006.01)*    *H01R 4/68* *(2006.01)*
*H01R 9/11* *(2006.01)*

(52) Cooperative Patent Classification (CPC):
**H01F 6/065**

(86) International application number:
**PCT/EP2019/058992**

(87) International publication number:
**WO 2019/228698 (05.12.2019 Gazette 2019/49)**

(54) **SUPERCONDUCTING JOINTS**

SUPRALEITENDE VERBINDUNGEN

JOINTS SUPRACONDUCTEURS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.05.2018 GB 201808760**

(43) Date of publication of application:
**14.04.2021 Bulletin 2021/15**

(73) Proprietor: **Siemens Healthcare Limited
Camberley, Surrey GU15 3YL (GB)**

(72) Inventor: **WOZNIAK, Mariusz
Oxfordshire OX29 4BP (GB)**

(74) Representative: **Maier, Daniel Oliver
Siemens AG
T IP TLI
Otto-Hahn-Ring 6
81739 München (DE)**

(56) References cited:
**JP-A- S60 175 383    JP-A- S60 182 673**

**Description**

The present invention relates to an arrangement of superconducting joints, for example in a superconducting magnet for an MRI system. The invention also relates to arrangements for storage of excess wire in such superconducting joints.

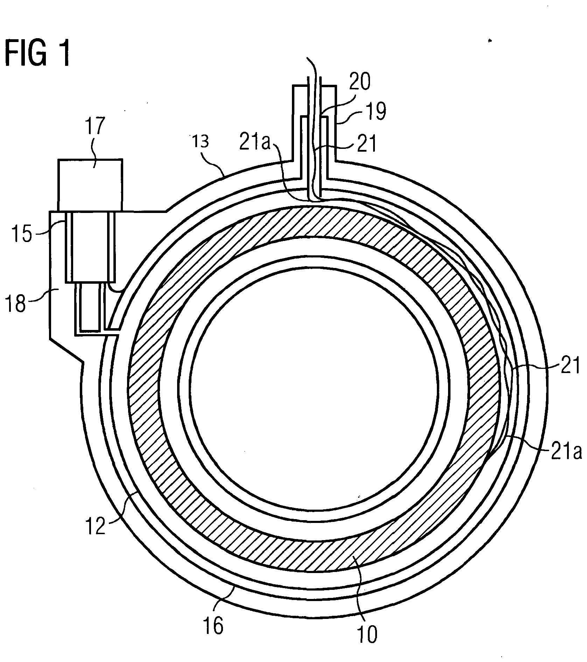

Fig. 1 shows a conventional superconducting magnet for an MRI system. It includes a cryostat including a cryogen vessel 12. A cooled superconducting magnet 10 is provided within cryogen vessel 12, itself retained within an outer vacuum chamber (OVC) 13. One or more thermal radiation shields 16 are provided in the vacuum space between the cryogen vessel 12 and the outer vacuum chamber 13. In some known arrangements, a refrigerator 17 is mounted in a refrigerator sock 15 located in a turret 18 provided for the purpose, towards the side of the cryostat. Alternatively, a refrigerator 17 may be located within access turret 19, which retains access neck (vent tube) 20 mounted at the top of the cryostat. The refrigerator 17 provides active refrigeration to cool cryogen gas within the cryogen vessel 12, in some arrangements by recondensing it into a liquid. The refrigerator 17 may also serve to cool the radiation shield 16. As illustrated in Fig. 1, the refrigerator 17 may be a two-stage refrigerator. A first cooling stage is thermally linked to the radiation shield 16, and provides cooling to a first temperature, typically in the region of 80-100K. A second cooling stage provides cooling of the cryogen gas to a much lower temperature, typically in the region of 4-10K.

A negative electrical connection 21a is usually provided to the magnet 10 through the body of the cryostat. A positive electrical connection 21 is usually provided by a conductor passing through the vent tube 20.

Superconducting magnet 10 comprises a number of coils of superconducting wire, electrically interconnected. These connections, and others required to complete the electrical interconnection of the coils and other electrical equipment, are carefully constructed to ensure a minimum joint resistance and effective cooling. The present invention relates to methods and joints useful in such an application.

The methods and joints of the present invention provide advantages at least in the fields of efficient cooling of superconducting joints and storage of excess wire. Excess wire is typically desired within the structure of a superconducting joint, to enable the joint to be unmade and remade, if necessary, during the lifetime of the superconducting magnet.

Conventional arrangements for effectively cooling a superconducting joint involve an electrically insulating but thermally conducting interface between a cooling means and the joint. Such conventional arrangements, however, typically have the disadvantages of requiring costly and complex parts which need to be precisely assembled. Added costs and complexity arise from the need to provide electrical insulation and to perform voltage breakdown testing. Examples of such arrangements are disclosed in US8253024, US20130090245, US20140024534, US20160086693, CN101414742B.

JP S60 182673 A and JP S60 175383 A describe arrangements and methods for making and cooling superconductor joints.

In other known solutions, a cooling pipe containing a cryogen such as gas or liquid helium, neon or nitrogen is provided between the joint and the cryogen vessel or some other cooled component. An electrically insulating but thermally conducting element must be provided to ensure electrical insulation between the cooling pipe and the joint. Such arrangements have disadvantages in requiring costly and complex pipes and vessels with cryogen gas or liquid. Such components must be leak tight and approved for use as pressure vessels. The need to provide electrical insulation between pipes and joints introduces further complexity. An example of such an arrangement is discussed in US8315680.

An aspect of the invention relates to the storage of excess superconducting wire near the joint. It is conventional to coil excess superconducting wire and immobilise it using the same superconducting alloy as used for embedding the joint. Conventionally, excess superconducting wire is coiled inside a metal cup which is filled with liquid superconducting alloy and allowed to cool down to solidify. This creates a large, cylindrical volume of superconducting alloy. However, use of such large volumes of superconducting alloy may create joints which are prone to flux jumps. A large mass of superconducting alloy will require a long cool-down time, and a cup must be provided to contain the alloy. A relatively high-temperature step must be undertaken to melt the alloy and immerse the joint in it. It is also difficult, and may be messy, to extract the excess superconducting wire from the joint cup when a rejoining step is required.

The present invention accordingly provides a superconducting joint arrangement with wire storage arrangement to store excess length of the joined superconducting wires in the vicinity of the joint. The arrangements of the present invention provide effective cooling of the joint even in the absence of a cooling cryogen bath.

The present invention accordingly provides superconducting joints and methods for producing superconducting joints as defined in the appended claims.

The above, and further, objects, characteristics and advantages of the present invention will become more apparent from the following description of certain embodiments, given by way of examples only, in conjunction with the appended drawings, wherein:

Fig. 1 shows an example of a conventional MRI magnet system, comprising superconducting coils within a cryostat;
Fig. 2 shows an example of a superconducting joint according to an embodiment of the present invention;

Fig. 3 shows an enlargement of a part of the drawing shown in Fig. 2;
Fig. 4 represents an embodiment in which the joint is cast into a solid block;
Fig. 5 represents an embodiment of the present invention, to explain issues of mutual inductance between coils,;
Fig. 6 represents a variant of Fig. 5; and
Fig. 7 illustrates current paths through the excess wire and the superconducting joint under certain circumstances.

The present invention accordingly provides a superconducting joint for superconducting magnets, wherein an elongate joint is made between superconducting filaments of superconducting wires of one or more superconducting coils, excess wire forming parts of the superconducting wires being provided electrically between the elongate joint and the one or more superconducting coils, wherein the elongate joint is in thermal contact with at least one of the superconducting wires at a location electrically between the one or more superconducting coils and the excess wire.

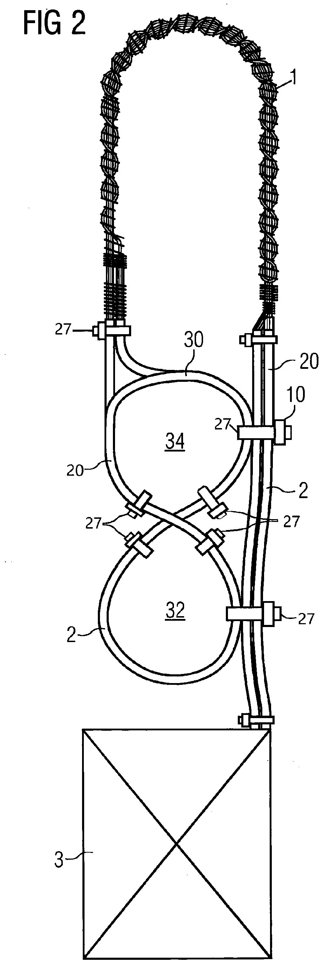

Fig. 2 schematically illustrates a superconducting joint according to an example embodiment of the present invention. Coils of superconducting wire 3 form part of the superconducting magnet. They are cooled by cooling means not illustrated, but which may include cryogen material and a refrigerator as described with reference to Fig. 1. Alternatively, as is the case with some modern superconducting magnet systems, a cryogen vessel containing a bath of liquid cryogen is not provided. Cooling may be provided to the coils of superconducting wire 3 by conduction along a solid thermal bus to a cryogenic refrigerator, for example, or cooling may be by cooling loop: a closed siphon of cryogen which circulates in the loop and is cooled by a cryogenic refrigerator. In such magnet systems, there is no bath of liquid cryogen to maintain joints at superconducting temperatures. The present invention aims to provide an effective manner of cooling joints between superconducting wires in a superconducting magnet system, while offering storage of excess superconducting wire required for remaking the joints if necessary.

The joint 1 is made up from two superconducting wires 2, themselves forming part of the coils of superconducting wire 3, typically one wire each from respective coils of superconducting wire 3. As shown in Fig. 2, 'tails' of wires 2 may be enclosed in respective insulating sleeving 20 over a part of their length. Insulating sleeving may be a PVC tube, a nylon braid or an enamel coating. Joint 1 is formed at the ends of the tails.

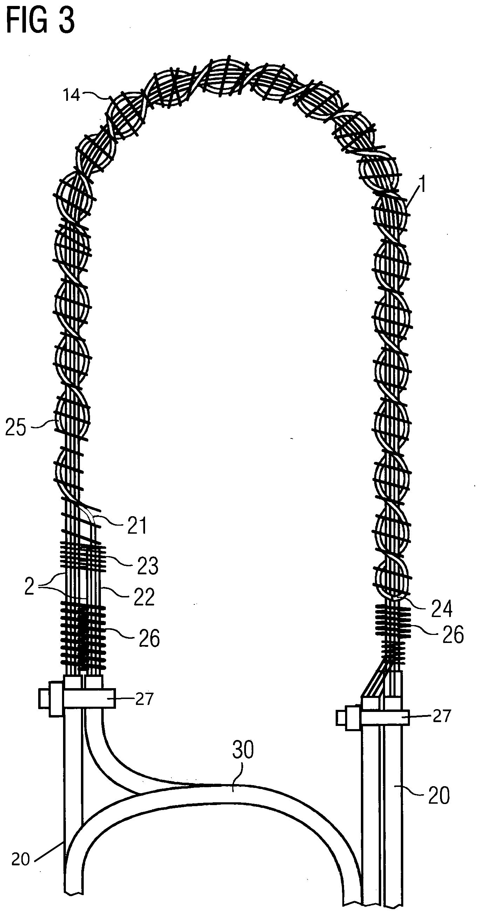

As is well-known in the art, and illustrated in Fig. 3, superconducting wires 2 typically comprise elongate superconducting filaments 21 embedded within a sheath 22 of a conductor such as copper, silver, aluminium etc.. At the free end of each wire, the sheath 22 is removed over a significant length such as 10-30 cm, to expose the filaments 21. This may be achieved, for example, by hydrogen fluoride etch, to remove the material of sheath 22 and to clean the surfaces of the filaments 21. The superconducting filaments are thereby exposed over a certain length.

The filaments of the wires to be joined are twisted or plaited together to form elongate superconducting joint 1. The plaited or twisted filaments may then be tinned, for example with indium, to assist surface wetting of the superconducting filaments by superconducting alloy. The elongate superconducting joint 1 may then be coated in a solder, preferably a superconducting solder such as lead-bismuth. The elongate superconducting joint 1 is then placed in thermal contact with at least one of superconducting wires 2, in this example by being wrapped around the superconducting wires 2, electrically between an extremity 23 of the corresponding at least one sheath 22 and the superconducting coil 3. As shown in Fig. 2, the join 1 is thermally attached to the metal sheaths of the wires 2, electrically between the superconducting coil 3 and a first end of the elongate superconducting joint 1. The elongate superconducting joint 1 may be thermally attached to at least one of superconducting wires 2, electrically between an extremity 23 (Fig. 3) of the corresponding at least one sheath 22 and the superconducting coil 3, in a manner other than wrapping, but an effective thermal contact should be established between the elongate joint 1 and the sheath 22 of least one of superconducting wires 2, between an extremity 23 of the corresponding at least one sheath 22 and the superconducting coils 3. In addition to the described thermal contact, the elongate joint 1 should be firmly mechanically held in place, since any freedom to move may cause quench of the joint due to induced eddy currents within the sheath material of the wire. The thermal attachment may be improved by binding the join to the wires, using a thin binding wire 14 such as of copper, aluminium or silver. A good thermal contact is thereby assured between the join 1 and the coil of superconducting wire 3. Any heat arising in the join 1 will be conducted to wires 2 and then along the wires, therefore to coils of superconducting wire 3. Such heat will be carried away by the cooling arrangement provided for cooling the coils of superconducting wire 3.

This arrangement, according to the present invention, provides a relatively short heat transfer path from elongate superconducting joint 1 to cooled coils 3. In the absence of the arrangement of the present invention, heat would have to pass from the elongate joint 1 along the length of excess wire 30 to reach the cooled coils. The present invention provides a much reduced thermal path between the elongate superconducting join and the cooled coils, increasing the effectiveness of the cooling of the elongate superconducting joint and reducing the likelihood of a quench being initiated in the elongated superconducting joint.

The elongate superconducting joint 1 may be soldered to the wires 2, using the same solder which is used in the joint, thereby providing a very effective thermal link between the join and the wires 2, and a very effective mechanical support for the joint. The use of binding wire 14 provides these advantages, to some extent. In certain embodiments, binding wire and solder may be used.

The join 1 is formed over a significant length of the superconducting filaments, for example over 10-30cm. This will ensure low joint resistance and high current handling capacity.

Preferably, the join 1 is thermally linked to wires 2 relatively close to the coils of superconducting wire 3, ensuring effective thermal coupling between the join 1 and the coils of superconducting wire 3.

In alternative embodiments, the thermal and mechanical contact between the elongate joint 1 and the at least one superconducting wire 2 may be obtained by clamping, pressing or gluing with a suitable adhesive, such as a LOCTITE (RTM) STYCAST (RTM) resin which may be obtained from Henkel Ltd.

The join may be located in a vacuum region, or within a cryogen vessel illustrated in Fig. 1. If positioned within a cryogen vessel, however, cooling may be provided to the joint by boiling or convection of adjacent cryogen material.

As explained above, superconducting coils 3 are cooled by cooling means not illustrated to a cryogenic temperature sufficiently cold to enable superconducting operation of superconducting coils 3. Joint 1, being thermally in contact with sheaths 22 of wires 2, is cooled by thermal conduction along those sheaths to the cooled superconducting coils 3.

Sheath 22 is of a thermally conductive material such as copper, aluminium, silver or a combination of some or all of those metals. Elongate joint 1 may make electrical contact as well as thermal and mechanical contact with the sheaths 22 of superconducting wires 2, as sheaths 22 and elongate joint 1 will be at a same voltage. The thermal conductivity of sheaths 22 carries heat from elongate joint 1 towards the superconducting coil 3.

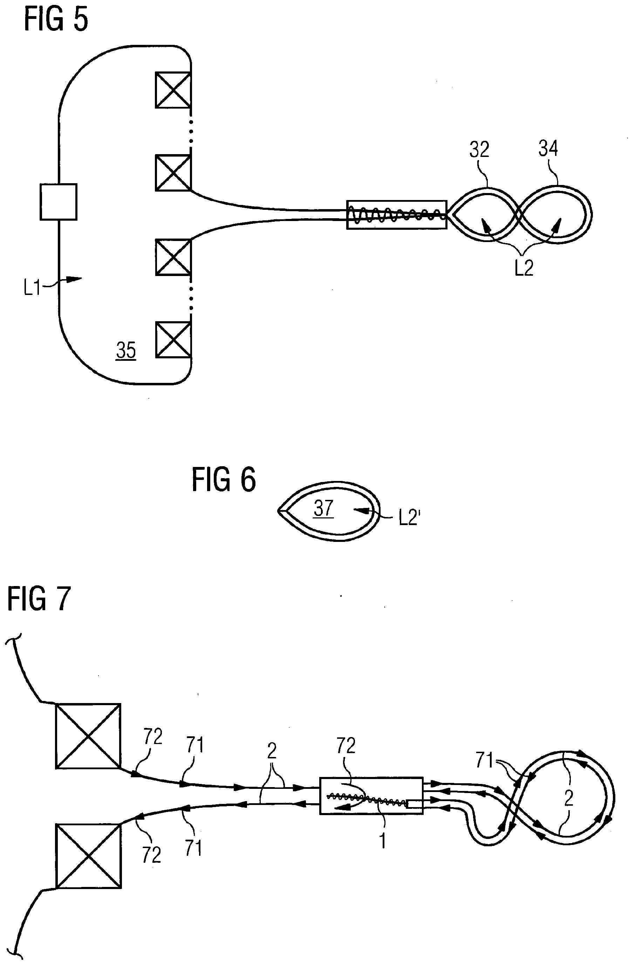

Fig. 7 illustrates current paths through a superconducting joint of the present invention, when in superconducting operation, and following a quench. In normal superconducting operation, current flows along path 71. Path 71 follows one joined superconducting wire 2 to elongated superconducting joint 1, passes through the elongated superconducting joint 1 and out following the other joined superconducting wire 2.

Following a quench, the superconducting wire 2 and the elongate superconducting joint 1 become resistive. Typically, the metal sheath 22 is of lower resistance than the filaments 21 in this state. Current flows along path 72 following a quench. Path 72 follows one joined superconducting wire 2 but along the metallic sheath 22 in preference to the filaments 21. At elongated superconducting joint 1, current preferably transfers from metallic sheath 22 of one wire to metallic sheath 22 of the other wire, through the solder if present and out following the other joined superconducting wire 2.

As illustrated in Fig. 3, the elongate joint 1 may be doubled back at a turning point 24, such that an extremity 25 of the elongate superconducting joint 1 is located closer to the extremity 23 of the sheath 22 than the turning point 24. Care must be taken at turning point 24 that the radius of curvature is not so tight that damage may occur to the superconducting filaments 21 of the elongate joint 1.

Assembly of the joint of the present invention may be facilitated by use of binding 26, for example of copper wire, to retain wires 2 together, and/or binding 14, for example of copper wire, to retain the elongate superconducting joint 1 in mechanical contact with sheaths 22 of wires 2. In an embodiment, elongate superconducting joint 1 may be formed from superconducting filaments coated in a solder such as a superconducting solder, then the elongate superconducting joint 1 may be wound around the wires 2, as illustrated in Fig. 2, and bound in place by binding 14.

In an alternative embodiment, a further soldering step may be applied to solder the elongate joint to the sheaths 22 of wires 2, to provide an improved thermal conduction between elongate joint 1 and wires 2. A superconducting solder is preferably used, such as lead-bismuth or indium-tin. Such further soldering step may be performed prior to, following, or in place of, binding of the elongate joint 1 to sheaths 22 of wires 2 by binding 27.

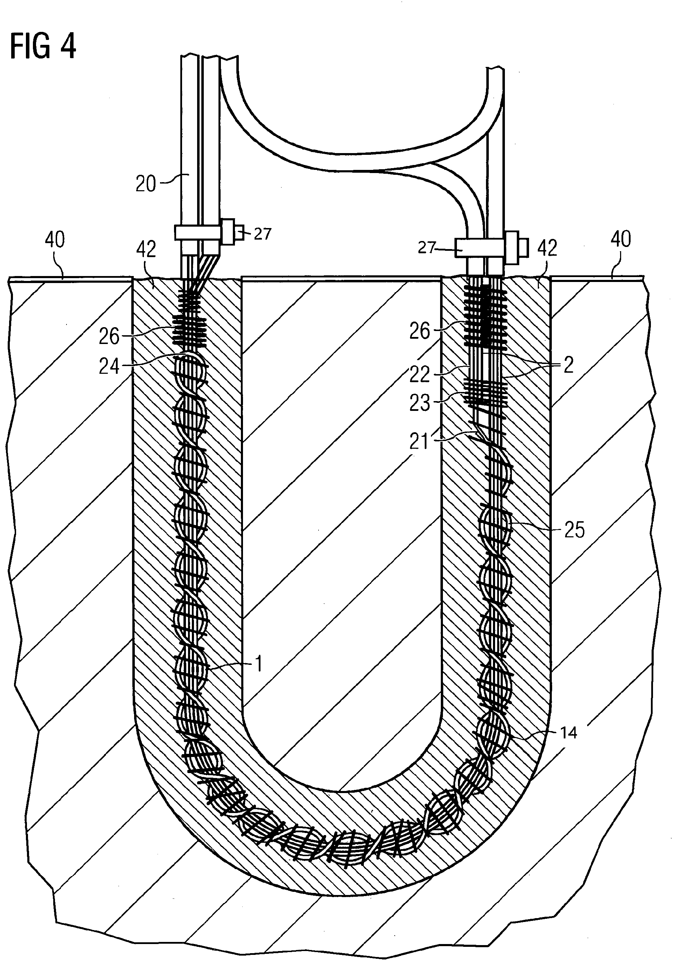

In an embodiment, as illustrated in Fig. 4, a mould 40 is provided; the elongate joint 1 and the adjacent part of the at least one superconducting wire 2 are located within the mould, and the mould is filled with a superconducting solder 42 such as lead-bismuth or indium-tin or other superconducting alloy or compound and the elongate joint 1 and the adjacent part of the at least one superconducting wire 2 are cast into a solid block of superconducting alloy or compound 42. In a particular embodiment, the mould 40 is a U-shape mould, for ease of pouring molten alloy or compound but other shapes of mould could be used where appropriate.

According to a feature of the present invention, as illustrated in Fig. 2, a length of excess wire 30 is present, forming parts of wires 2 electrically between the superconducting coils 3 and the elongate joint 1. In an embodiment of the invention, excess wire 30 may have a length of about 90cm, being sufficient length to re-make elongate joint 1 up to three times. As illustrated, one or more lengths of sleeving 20 may be placed over the excess wire 30.

Excess wire 30 is provided as a loop, comprising wires 2 electrically between elongate joint 1 and superconducting coils 3. In the illustrated embodiment, and preferably, excess wire 30 is wound into a figure-of-eight configuration, to reduce magnetic field coupling (mutual inductance) between a current loop created by excess wire 30 and current loop created by the main persistent circuit of the MRI system. This will be further explained with reference to Figs. 5-6.

As is well known in the art, and with reference to the two loops 32, 34 of the figure-of-eight arrangement shown in Fig. 2, a minimum magnetic field coupling will arise when the area enclosed in a first loop 32 equals the area enclosed by a second loop 34. Other embodiments may have three or four loops, provided that the total area enclosed in a first loop and a third loop equals the area enclosed by a second loop and a fourth loop, if any. Electrical insulation should be provided at the cross-over point(s) of the figure-of-eight arrangement, to prevent electrical conduction between the electrical sheaths of respective wires at that point.

In the illustrated embodiment of Fig.5, and preferably, first loop 32 encloses a same area as that enclosed by second loop 34. This minimises the mutual inductance between the magnet loop L1 35, comprising the current path representing the whole superconducting magnet, and loop L2 which comprises the summed effect of first loop 32 and second loop 34. Since first loop 32 and second loop 34 are of equal enclosed areas, but carry current in opposing directions, their effects essentially cancel out. Fig. 6 illustrates a single loop L2' 37 which, if used in place of L2 comprising first loop 32 and second loop 34, would result in an unwanted magnetic coupling between loop L1 and loop L2'.

If constructed as above, first loop 32 and second loop 34 of loop L2 are inherently non-inductive, provided that the two wires 2 joined at the elongate superconducting joint 1 are close and parallel to one another.

In other embodiments, use of a single loop L2' 37 as illustrated in Fig. 6 is possible, provided that the single loop L2' 37 is aligned precisely in parallel with the magnetic field generated by magnet loop L1 35. In such case, arrangement of the excess wire 30 into a figure-of-eight loop would not be required as mutual inductance between the magnet loop L1 35 and excess wire of single loop L2' 37 would be close to zero. Care should be taken to avoid mutual induction between single loop L2' 37 and any magnetic field sources external to the magnet.

As a result of small mutual inductance, which may be arranged for as set out above, the net force resulting from the magnetic field of the superconducting magnet on the figure-of-eight arrangement of excess wire 30 is also minimized. This simplifies mounting arrangements and is beneficial.

Preferably, in any case, the loop containing excess wire 30 is formed as a flat, essentially planar structure. In a particular embodiment, the loop containing excess wires 30 is positioned inside OVC 14 such that a magnetic field produced by the superconducting magnet 10 is substantially parallel to the plane of the loop containing excess wires 30, to minimise magnetic coupling between the superconducting magnet 10 and the loop containing excess wires 30.

The effect of other magnetic fields may also be taken into account, such that total local magnetic field is substantially parallel to the plane of the non-inductively-wound windings. Such arrangement minimises the current induced in the non-inductively-wound windings due to external field changes as a result of energisation of the superconducting magnet and other coils associated with the superconducting magnet. For example, gradient coils produce a rapidly varying magnetic field which may have a greater potential for inducing current on the loop(s) of excess wire 30 than any likely variation in the main magnet field.

It is important that the superconducting wire 2 is restrained in position, as far as is practicable. If the superconducting wire were free to move, any movement would take place within the magnetic field of the superconducting coil, and so a voltage would be induced in the wires, which may cause interference with the magnet magnetic field, and could even lead to quench of the magnetic field.

In the illustrated embodiment, this is achieved by use of nylon cable ties 27.

In an alternative embodiment, the excess wire 30 may be wrapped around retaining posts provided for the purpose. Other means for retaining the excess wire in position may be employed, as will be apparent to those skilled in the art.

In an example embodiment, the inventors found that a join according to the present invention, in use in a superconducting state, had a resistance of less than $10^{-12}$ ohm, providing a power dissipation of no more than $10^{-6}$ watts at a current of up to 1000 amperes. This low level of power dissipation, combined with high thermal conductivity between the join and the coil of superconducting wire 3 means that the temperature of the join will rise very little.

The phenomenon of flux jumping is discussed in E.W. Collings and M.D. Sumption, "Stability and AC Losses in HTSC/Ag Multifilamentary Strands" Applied Superconductivity Vol. 3, No. 11/12, pp. 551-557, 1995.

Flux jumping of magnet joints could lead to the quench of the whole magnet, and so should be avoided as far as reasonably possible.

From adiabatic theory of flux jumping it could be shown that a characteristic flux jumping dimension is proportional to: specific heat C, difference between critical temperature $T_c$ and operating temperature T and inversely proportional to critical current density $J_c$ of superconductor (eq.1): When size of superconducting alloy is above $a_{FJ}$ flux jumps are possible.

$$a_{FJ} \approx \sqrt{\frac{C \cdot (T_c - T)}{J_c}} \qquad (1)$$

Often the combination of C, $T_c$, $J_c$ at operating temperature T of superconducting alloy 42 used in superconducting joints requires the characteristic dimension $a_{FJ}$ to be less than 10-20mm. This dimensional restriction makes it very challenging to store excess length of the joined superconducting wires 30 embedded in superconducting alloy 42.

According to at least one embodiment of the present invention, the excess wires 30 are stored in a figure-of-eight loop. Arranging excess wire storage 30 in this way allows for reducing the dimensions of superconducting alloy 42 to below characteristic dimension $a_{FJ}$. In the case of the embodiment of Fig. 4, this means that the dimensions of the superconducting material in directions perpendicular to wires 2 are less than 20 mm and preferably less than 10mm. Reducing size of superconducting alloy 42 reduces the tendency for flux jumps in the superconducting material 42 of the joint. Limiting the dimension of the superconducting material 42 in the direction of the local magnetic field to below 20mm and preferably below 10mm results in adiabatic stability against flux jumps.

**Claims**

1. A superconducting joint arrangement for superconducting magnets, wherein an elongate joint (1) is made between superconducting filaments (21) of superconducting wires (2) of one or more superconducting coils (3), **characterized in that** excess wire (30) forming parts of the superconducting wires (2) is arranged electrically between the elongate joint (1) and the one or more superconducting coils (3), and **in that** the elongate joint is in thermal contact with at least one of the superconducting wires at a location electrically between the one or more superconducting coils and the excess wire.

2. The superconducting joint arrangement according to claim 1, wherein the elongate joint is in electrical contact with at least one of the superconducting wires at a location electrically between the one or more superconducting coils and the excess wire.

3. The superconducting joint arrangement according to claim 1 or claim 2, wherein the elongate joint is bound to at least one of the superconducting wires by binding wire (14).

4. The superconducting joint arrangement according to any preceding claim, wherein the elongate joint comprises a superconducting solder (42).

5. The superconducting joint arrangement according to claim 4, wherein the elongate joint is soldered to the at least one superconducting wire.

6. The superconducting joint arrangement according to claim 4, wherein the elongate joint (1) and an adjacent part of at least one superconducting wire (2) are cast into a solid block of superconducting alloy or compound (42).

7. The superconducting joint arrangement according to claim 6, wherein dimensions of the solid block of superconducting alloy or compound (42) in directions perpendicular to the at least one superconducting wire (2) are less than 20 mm.

8. The superconducting joint arrangement according to claim 7, wherein dimensions of the solid block of superconducting alloy or compound (42) in directions perpendicular to the at least one superconducting wire (2) are less than 10 mm.

9. The superconducting joint arrangement according to any preceding claim, wherein the excess wire is retained in a figure-of-eight loop configuration.

10. The superconducting joint arrangement according to claim 4, wherein the excess wire is retained in the figure-of-eight loop configuration by a plurality of cable ties (27).

11. The superconducting joint arrangement according to claim 9 or claim 10 wherein the figure-of-eight loop configuration is essentially planar, and the plane of the figure-of-eight loop configuration is arranged parallel to the magnetic field of a superconducting magnet.

12. The superconducting joint arrangement according to claim 2, wherein the elongate joint (1) is in electrical contact with two superconducting wires (2) at a location electrically between the one or more superconducting coils (3) and the excess wire (30), and wherein, in case of a quench, current may flow from one of the two superconducting wires to the other of the superconducting wires without flowing through the length of the excess wire.

13. A method for forming a superconducting joint arrangement for superconducting magnets, comprising the steps of:

    - providing superconducting wires (2) extending from one or more superconducting coils (3), each superconducting wire comprising superconducting filaments (21) encased in a thermally conductive sheath (22);

- exposing a length of superconducting filaments by removing the sheath at a free end of each superconducting wire;

- forming the superconducting filaments into a joint (1);

- attaching the joint in thermal contact with at least one of the wires at a location electrically between the coils and the joint,

wherein a length of excess wire (30) forming parts of the superconducting wires (2) is left electrically between the superconducting coils (3) and the superconducting joint (1), and the superconducting joint is attached in thermal contact with the superconducting wires at a location electrically between the superconducting coils and the excess wire.

14. A method according to claim 13 wherein the step of attaching the joint in thermal contact with at least one of the wires (2) at a location electrically between the coils (3) and the joint comprises forming an elongate superconducting joint (1) and wrapping the elongate superconducting joint (1) around at least one of superconducting wires (2), electrically between an extremity (23) of the corresponding at least one sheath (22) and the superconducting coil.

15. A method according to any of claims 13-14 wherein the elongate joint is doubled back at a turning point (24), such that an extremity (25) of the superconducting joint is located closer to an extremity (23) of the sheath than the turning point (24).

16. A method according to any of claims 13-15 wherein the elongate joint is formed from superconducting filaments coated in a solder (42), the elongate joint so formed then being wound around the wires and bound in place by binding wire (14) .

17. A method according to any of claims 13-15 wherein the elongate joint is soldered to the sheaths (22) of the wires.

18. A method according to claim 17, wherein the elongate joint (1) and an adjacent part of at least one superconducting wire (2) are cast into a solid block of superconducting alloy or compound (42).

19. A method according to claim 18, wherein dimensions of the solid block of superconducting alloy or compound (42) in directions perpendicular to the at least one superconducting wire (2) are less than 20 mm.

20. A method according to claim 19, wherein dimensions of the solid block of superconducting alloy or compound (42) in directions perpendicular to the at least one superconducting wire (2) are less than 10 mm.

21. A method according to claim 13 wherein the excess wire (30) is wound into a figure-of-eight configuration.

22. A method according to claim 21 wherein the figure-of-eight loop configuration is essentially planar, and the plane of the figure-of-eight loop configuration is arranged parallel to the magnetic field of a superconducting magnet.

**Patentansprüche**

1. Anordnung supraleitender Verbindungen für supraleitende Magneten, wobei zwischen supraleitenden Filamenten (21) supraleitender Drähte (2) einer oder mehrerer supraleitender Spulen (3) eine langgestreckte Verbindung (1) hergestellt ist, **dadurch gekennzeichnet, dass** überschüssiger Draht (30), der Teile der supraleitenden Drähte (2) bildet, elektrisch zwischen der langgestreckten Verbindung (1) und der einen oder den mehreren supraleitenden Spulen (3) angeordnet ist, und dadurch, dass die langgestreckte Verbindung an einer Stelle, die elektrisch zwischen der einen oder den mehren supraleitenden Spulen und dem überschüssigen Draht liegt, in thermischem Kontakt mit mindestens einem der supraleitenden Drähte steht.

2. Anordnung supraleitender Verbindungen nach Anspruch 1, wobei die langgestreckte Verbindung an einer Stelle, die elektrisch zwischen der einen oder den mehren supraleitenden Spulen und dem überschüssigen Draht liegt, in elektrischem Kontakt mit mindestens einem der supraleitenden Drähte steht.

3. Anordnung supraleitender Verbindungen nach Anspruch 1 oder Anspruch 2, wobei die langgestreckte Verbindung durch Bindedraht (14) an mindestens einen der supraleitenden Drähte gebunden ist.

4. Anordnung supraleitender Verbindungen nach einem der vorhergehenden Ansprüche, wobei die langgestreckte Verbindung ein supraleitendes Lot (42) umfasst.

5. Anordnung supraleitender Verbindungen nach Anspruch 4, wobei die langgestreckte Verbindung an den mindestens einen supraleitenden Draht gelötet ist.

6. Anordnung supraleitender Verbindungen nach Anspruch 4, wobei die langgestreckte Verbindung (1) und ein benachbarter Teil mindestens eines supraleitenden Drahtes (2) zu einem massiven Block aus supraleitender Legierung oder Vergussmasse (42) gegossen sind.

7. Anordnung supraleitender Verbindungen nach Anspruch 6, wobei Maße des massiven Blocks aus supraleitender Legierung oder Vergussmasse (42) in Richtungen senkrecht zu dem mindestens einen supraleitenden Draht (2) kleiner als 20 mm sind.

8. Anordnung supraleitender Verbindungen nach Anspruch 7, wobei Maße des massiven Blocks aus supraleitender Legierung oder Vergussmasse (42) in Richtungen senkrecht zu dem mindestens einen supraleitenden Draht (2) kleiner als 10 mm sind.

9. Anordnung supraleitender Verbindungen nach einem der vorhergehenden Ansprüche, wobei der überschüssige Draht in einer Schleifengestaltung in Form einer Acht gehalten wird.

10. Anordnung supraleitender Verbindungen nach Anspruch 4, wobei der überschüssige Draht durch mehrere Kabelbinder (27) in der Schleifengestaltung in Form einer Acht gehalten wird.

11. Anordnung supraleitender Verbindungen nach Anspruch 9 oder Anspruch 10, wobei die Schleifengestaltung in Form einer Acht im Wesentlichen eben ist und die Ebene der Schleifengestaltung in Form einer Acht parallel zu dem Magnetfeld eines supraleitenden Magneten angeordnet ist.

12. Anordnung supraleitender Verbindungen nach Anspruch 2, wobei die langgestreckte Verbindung (1) an einer Stelle, die elektrisch zwischen der einen oder den mehren supraleitenden Spulen (3) und dem überschüssigen Draht (30) liegt, in elektrischem Kontakt mit zwei supraleitenden Drähten (2) steht und wobei im Fall eines Quench Strom von einem der zwei supraleitenden Drähte zu dem anderen der supraleitenden Drähte fließen kann, ohne durch die Länge des überschüssigen Drahtes zu fließen.

13. Verfahren zum Bilden einer Anordnung supraleitender Verbindungen für supraleitende Magnete, folgende Schritte umfassend:

   - Bereitstellen supraleitender Drähte (2), die sich von einer oder mehreren supraleitenden Spulen (3) aus erstrecken, wobei jeder supraleitende Draht supraleitende Filamente (21) umfasst, die in einer thermisch leitenden Umhüllung (22) eingeschlossen sind,
   - Freilegen einer Länge supraleitender Filamente durch Entfernen der Umhüllung an einem freien Ende jedes supraleitenden Drahtes,
   - Bilden einer Verbindung (1) aus den supraleitenden Filamenten,
   - Anbringen der Verbindung in thermischem Kontakt mit mindestens einem der Drähte an einer Stelle, die elektrisch zwischen den Spulen und der Verbindung liegt,

   wobei eine Länge überschüssigen Drahtes (30), der Teile der supraleitenden Drähte (2) bildet, elektrisch zwischen den supraleitenden Spulen (3) und der supraleitenden Verbindung (1) belassen wird, und die supraleitende Verbindung an einer Stelle, die elektrisch zwischen den supraleitenden Spulen und dem überschüssigen Draht liegt, in thermischem Kontakt mit den supraleitenden Drähten angebracht wird.

14. Verfahren nach Anspruch 13, wobei der Schritt des Anbringens der Verbindung in thermischem Kontakt mit mindestens einem der Drähte (2) an einer Stelle, die elektrisch zwischen den Spulen (3) und der Verbindung liegt, das Bilden einer langgestreckten supraleitenden Verbindung (1) und das Wickeln der langgestreckten supraleitenden Verbindung (1) um mindestens einen der supraleitenden Drähte (2), elektrisch zwischen einem Endpunkt (23) der entsprechenden mindestens einen Umhüllung (22) und der supraleitenden Spule, umfasst.

15. Verfahren nach einem der Ansprüche 13 bis 14, wobei die langgestreckte Verbindung an einem Umkehrpunkt (24) derart zurückgeführt wird, dass sich ein Endpunkt (25) der supraleitenden Verbindung näher an einem Endpunkt (23) der Umhüllung befindet als der Umkehrpunkt (24).

16. Verfahren nach einem der Ansprüche 13 bis 15, wobei die langgestreckte Verbindung aus supraleitenden Filamenten gebildet wird, die mit einem Lot (42) überzogen sind, wobei die langgestreckte Verbindung derart gebildet wird, dass sich um die Drähte gewickelt und durch Bindedraht (14) festgebunden ist.

17. Verfahren nach einem der Ansprüche 13 bis 15, wobei die langgestreckte Verbindung an die Umhüllungen (22) der Drähte gelötet wird.

18. Verfahren nach Anspruch 17, wobei die langgestreckte Verbindung (1) und ein benachbarter Teil mindestens eines supraleitenden Drahtes (2) zu einem massiven Block aus supraleitender Legierung oder Vergussmasse (42) gegossen werden.

19. Verfahren nach Anspruch 18, wobei Maße des massiven Blocks aus supraleitender Legierung oder Vergussmasse (42) in Richtungen senkrecht zu dem mindestens einen supraleitenden Draht (2) kleiner als 20 mm sind.

20. Verfahren nach Anspruch 19, wobei Maße des massiven Blocks aus supraleitender Legierung oder Vergussmasse (42) in Richtungen senkrecht zu dem mindestens einen supraleitenden Draht (2) kleiner als 10 mm sind.

21. Verfahren nach Anspruch 13, wobei der überschüssige Draht (30) zu einer Schleifengestaltung in Form einer Acht gewickelt wird.

22. Verfahren nach Anspruch 21, wobei die Schleifengestaltung in Form einer Acht im Wesentlichen eben ist und die Ebene der Schleifengestaltung in Form einer Acht parallel zu dem Magnetfeld eines supraleitenden Magneten angeordnet wird.

## Revendications

1. Agencement de jonction supraconductrice pour des aimants supraconducteurs, dans lequel une jonction (1) oblongue est faite entre des filaments (21) supraconducteurs de fils (2) supraconducteurs d'une ou de plusieurs bobines (3) supraconductrice, **caractérisé en ce que** du fil (30) en excès formant des parties des fils (2) supraconducteurs est monté électriquement entre la jonction (1) oblongue et la une ou les plusieurs bobines (3) supraconductrices, et **en ce que** la jonction oblongue est en contact thermique avec au moins l'un des fils supraconducteurs à un emplacement électriquement entre la une ou les plusieurs bobines supraconductrices et le fil en excès.

2. Agencement de jonction supraconductrice suivant la revendication 1, dans lequel la jonction oblongue est en contact électrique avec au moins l'un des fils supraconducteurs en un emplacement électriquement entre la une ou les plusieurs bobines supraconductrices et le fil en excès.

3. Agencement de jonction supraconductrice suivant la revendication 1 ou revendication 2, dans lequel la jonction oblongue est reliée à au moins l'un des fils supraconducteurs par du fil (14) de liaison.

4. Agencement de jonction supraconductrice suivant l'une quelconque des revendications précédentes, dans lequel la jonction oblongue comprend une soudure (42) supraconductrice.

5. Agencement de jonction supraconductrice suivant la revendication 4, dans lequel la jonction oblongue est soudée au au moins un fil supraconducteur.

6. Agencement de jonction supraconductrice suivant la revendication 4, dans lequel le jonction (1) oblongue et une partie voisine d'au moins un fil (2) supraconducteur sont coulées dans un bloc plein d'alliage ou de composé (42) supraconducteur.

7. Agencement de jonction supraconductrice suivant la revendication 6, dans lequel des dimensions du bloc plein d'alliage ou de composé (42) supraconducteur, dans des directions perpendiculaires au au moins un fil (2) supraconducteur, sont inférieures à 20 mm.

8.  Agencement de jonction supraconductrice suivant la revendication 7, dans lequel des dimensions du bloc plein d'alliage ou de composé (42) supraconducteur, dans des directions perpendiculaires au au moins un fil (2) supraconducteur, sont inférieures à 10 mm.

9.  Agencement de jonction supraconductrice suivant l'une quelconque des revendications précédentes, dans lequel le fil en excès est retenu suivant une configuration en boucle en une figure de huit.

10. Agencement de jonction supraconductrice suivant la revendication 4, dans lequel le fil en excès est retenu, dans la configuration en boucle en figure de huit, par une pluralité de bracelets (27).

11. Agencement de jonction supraconductrice suivant la revendication 9 ou la revendication 10, dans lequel la configuration en boucle en figure de huit est sensiblement plane, et le plan de la configuration en boucle en figure de huit est disposé parallèlement au champ magnétique d'un aimant supraconducteur.

12. Agencement de jonction supraconductrice suivant la revendication 2, dans lequel la jonction (1) oblongue est en contact électrique avec deux fils (2) supraconducteurs en un emplacement électriquement entre la une ou les plusieurs bobines (3) supraconductrice et le fil (30) en excès et dans lequel, dans le cas d'une transition, du courant peut passer de l'un des deux fils supraconducteurs à l'autre des fils supraconducteurs sans passer dans le tronçon du fil en excès.

13. Procédé de formation d'un agencement de jonction supraconductrice pour des aimants supraconducteurs, comprenant les stades dans lesquels :

    - on se procure des fils (2) supraconducteurs s'étendant à partir d'une ou plusieurs bobines (3) supraconductrices, chaque fil supraconducteur comprenant des filaments (21) supraconducteurs enrobés dans une gaine (22) conductrice thermiquement ;
    - on met à nu un tronçon de filaments supraconducteurs en retirant la gaine à un bout libre de chaque fil supraconducteur ;
    - on forme les filaments supraconducteurs en une jonction (1) ;
    - on attache la jonction en contact thermique à au moins l'un des fils en un emplacement électriquement entre les bobines et la jonction,

    dans lequel on laisse un tronçon de fil (30) en excès, formant des parties des fils (2) supraconducteurs, électriquement entre les bobines (3) supraconductrices et la jonction (1) supraconductrice et on attache la jonction supraconductrice, en contact thermique avec les fils supraconducteurs en un emplacement électriquement entre les bobines supraconductrices et le fil en excès.

14. Procédé suivant la revendication 13, dans lequel le stade, par lequel on attache la jonction en contact thermique avec au moins l'un des fils (2) en un emplacement électriquement entre les bobines (3) et la jonction, comprend former une jonction (1) oblongue supraconductrice et envelopper au moins l'un des fils (2) supraconducteurs de la jonction (1) oblongue supraconductrice électriquement entre une extrémité (23) de la au moins une gaine (22) correspondante et la bobine supraconductrice.

15. Procédé suivant l'une quelconque des revendications 13 à 14, dans lequel on plie à bloc la jonction oblongue à un tournant (24), de manière à ce qu'un bout (25) de la jonction supraconductrice soit plus près d'un bout (23) de la gaine que du tournant (24).

16. Procédé suivant l'une quelconque des revendications 13 à 15, dans lequel on forme la jonction oblongue en des filaments supraconducteurs revêtus d'une soudure (42), la jonction oblongue ainsi formée étant ensuite enroulée autour des fils et liée en place par du fil (14) de liaison.

17. Procédé suivant l'une quelconque des revendications 13 à 15, dans lequel on soude la jonction oblongue aux gaines (22) des fils.

18. Procédé suivant la revendication 17, dans lequel on coule la jonction (1) oblongue et une partie voisine d'au moins un fil (2) supraconducteur dans un bloc plein d'alliage ou de composé (42) supraconducteur.

19. Procédé suivant la revendication 18, dans lequel des dimensions du bloc plein d'alliage ou de composé (42) supraconducteur, dans des directions perpendiculaires au au moins un fil (2) supraconducteur, sont inférieures à 20 mm.

20. Procédé suivant la revendication 19, des dimensions du bloc plein d'alliage ou de composé (42) supraconducteur, dans des directions perpendiculaires au au moins un fil (2) supraconducteur, sont inférieures à 10 mm.

21. Procédé suivant la revendication 13, dans lequel on enroule le fil (30) en excès en une configuration en figure de huit.

22. Procédé suivant la revendication 21, dans lequel la configuration en boucle en figure de huit est sensiblement plane, et le plan de la configuration en boucle en figure de huit est disposé parallèlement au champ magnétique d'un aimant supraconducteur.

FIG 1

FIG 2

# FIG 3

FIG 4

FIG 5

FIG 6

FIG 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8253024 B
- US 20130090245 A
- US 20140024534 A
- US 20160086693 A
- CN 101414742 B
- JP S60182673 A
- JP S60175383 A
- US 8315680 B

**Non-patent literature cited in the description**

- **E.W. COLLINGS ; M.D. SUMPTION.** Stability and AC Losses in HTSC/Ag Multifilamentary Strands. *Applied Superconductivity,* 1995, vol. 3, 551-557